# EUROPEAN PATENT APPLICATION

(11) **EP 4 847 147 A1**
(43) Date of publication of application: **02.12.2026**
(21) Application number: 24920160.9
(22) Date of filing: 09.12.2024
(51) Int. Cl.: B05C 7/04, B01J 35/57, B01J 37/02

(54) **ATTACHMENT FOR COATING**

(30) Priority: 25.01.2024 JP 2024009574
(71) Applicant: CATALER CORPORATION, Kakegawa-shi, Shizuoka 437-1492 (JP)
(72) Inventor: MORITA, Ryoma, Kakegawa-shi, Shizuoka 437-1492 (JP); OHARA, Etsuko, Kakegawa-shi, Shizuoka 437-1492 (JP); MATSUI, Suguru, Kakegawa-shi, Shizuoka 437-1492 (JP)
(74) Representative: Ricker, Mathias
(86) International application number: PCT/JP2024/043426
(87) International publication number: WO 2025/158803

(57) **Abstract**

Provided is an attachment for coating, said attachment being for coating a coating liquid onto an inner wall of a flow path of a honeycomb base material via a suction method. The attachment for coating has a substantially cylindrical shape in which a first open end is open at one end and a second open end is open at another end. A coating liquid storage part is provided at the first open end. A base material contact part for contacting an outer peripheral edge of an end of the honeycomb base material is provided on the side further toward the second open end than the coating liquid storage part. The base material contact part has a tapered surface, the inner diameter of which expands toward the second open end side.

## Description

### FIELD

The present invention relates to a coating attachment used for coating inner walls of flow paths of a honeycomb substrate with a coating liquid by the suction method.

### BACKGROUND

Exhaust gas purification catalyst devices for purifying exhaust gas emitted from an internal combustion engine of vehicle such as automobiles have a configuration in which inner walls of flow paths of a honeycomb substrate is coated with a catalyst coating layer containing an exhaust gas purification catalyst.

As methods for producing such an exhaust gas purification catalyst device, methods comprising a coating step by the "suction method" are known (Patent Literature 1 to 3). The "suction method" is a method in which a coating liquid for forming a catalyst coating layer is placed on one end surface of a honeycomb substrate, and suction is applied from the opposite end surface to spread the placed coating liquid into the flow path of the honeycomb substrate.

### [CITATION LIST]

### [PATENT LITERATURE]

[PTL 1] Japanese Unexamined Patent Publication (Kokai) No. 2007-268484
[PTL 2] Japanese Unexamined Patent Publication (Kokai) No. 2015-039672
[PTL 3] Japanese Unexamined Patent Publication (Kokai) No. 2006-015205

### SUMMARY

### [TECHNICAL PROBLEM]

When a coating liquid is applied to the flow path of a honeycomb substrate by the suction method, the coating liquid may adhere to a part of the outer surface of the honeycomb substrate. Catalyst components such as noble metals contained in the coating liquid that adheres to the outer surface of the honeycomb substrate do not contribute to exhaust gas purification. Thus, the adhesion of the coating liquid to a part of the outer surface of the honeycomb substrate during application leads to a loss of catalyst components.

The present invention has been conceived in light of the circumstances described above. An object of the present invention is to provide a coating attachment for suppressing adhesion of a coating liquid to a part of the outer surface of a honeycomb substrate when inner walls of flow paths of the honeycomb substrate is coated with the coating liquid by the suction method.

### [SOLUTION TO PROBLEM]

The present invention is as described below.
<<Aspect 1>> A coating attachment for coating an inner wall of a flow path of a honeycomb substrate with a coating liquid by a suction method, wherein
   the coating attachment has a substantially cylindrical shape with a first open end open at one end and a second open end open at another end,
   the coating attachment comprises a coating liquid storage part at the first open end, and a substrate contact part on the second open end side of the coating liquid storage part for contacting the outer edge of an end of the honeycomb substrate, and
   the substrate contact part has a tapered surface an inner diameter of which increases towards the second open end.
<<Aspect 2>> The coating attachment according to Aspect 1, comprising, closer to the second open end than the substrate contact part, a connection part which coaxially surrounds the honeycomb substrate, and
   a substrate affixation part which coaxially surrounds the honeycomb substrate and affixes the honeycomb substrate, in this order, wherein
   the connection part comprises an opening for bringing into communication a region of an outer surface of the honeycomb substrate near the substrate contact part with outside air.
<<Aspect 3>> The coating attachment according to Aspect 2, wherein the opening of the connection part extends in a circumferential direction of the connection part.
<<Aspect 4>> The coating attachment according to Aspect 3, wherein the opening of the connection part extends around an entire circumference of the connection part.
<<Aspect 5>> The coating attachment according to Aspect 4, wherein a portion of the connection part closer to the first open end than the opening and a portion of the connection part closer to the second open end than the opening are connected in an interior of the opening by a plurality of columnar parts present opening a mutual space in the circumferential direction of the connection part.
<<Aspect 6>> The coating attachment according to Aspect 5, wherein a cross-sectional shape obtained by cutting the columnar parts in a direction perpendicular to the axial direction of the coating attachment is circular, elliptical, polygonal, or arcuate.
<<Aspect 7>> The coating attachment according to any one of Aspects 2 to 6, wherein the substrate affixation part has a balloon-shaped member for pressing and affixing the outer circumferential surface of the honeycomb substrate.
<<Aspect 8>> The coating attachment according to any one of Aspects 1 to 7, wherein the substrate contact part is constituted by an elastic material.
<<Aspect 9>> The coating attachment according to any one of Aspects 1 to 8, wherein an angle between the tapered surface of the substrate contact part and an axis of the coating attachment is 35° or greater and 70° or smaller.
<<Aspect 10>> The coating attachment according to any one of Aspects 1 to 9, wherein the coating liquid storage part has a shape in which an inner diameter increases towards the first open end.

### [ADVANTAGEOUS EFFECTS OF INVENTION]

The coating attachment of the present invention can suppress adhesion of a coating liquid to a part of the outer surface of a honeycomb substrate when inner walls of flow paths of the honeycomb substrate is coated with the coating liquid by the suction method.

### BRIEF DESCRIPTION OF DRAWINGS

FIG. 1 is a schematic cross-sectional view showing an example of the configuration of the coating attachment of the present invention.
FIG. 2 is a schematic cross-sectional view showing the coating attachment of FIG. 1 mounted on a honeycomb substrate.
FIG. 3 is a schematic cross-sectional view showing another example of the configuration of the coating attachment of the present invention.
FIG. 4 is a schematic cross-sectional view showing the coating attachment of FIG. 3 mounted on a honeycomb substrate.
FIG. 5 is a perspective view of the coating attachment of FIG. 3.

### DESCRIPTION OF EMBODIMENTS

### <<Coating Attachment>>

The coating attachment of the present invention is a coating attachment for coating inner walls of flow paths of a honeycomb substrate with a coating liquid by a suction method, wherein
the coating attachment has a substantially cylindrical shape with a first open end open at one end and a second open end open at another end,
the coating attachment comprises a coating liquid storage part at the first open end, and a substrate contact part on the second open end side of the coating liquid storage part for contacting the outer edge of an end of the honeycomb substrate, and
the substrate contact part has a tapered surface an inner diameter of which increases towards the second open end.

The coating attachment of the present invention may further comprise, closer to the second open end than the substrate contact part, a connection part which coaxially surrounds the honeycomb substrate, and
a substrate affixation part which coaxially surrounds the honeycomb substrate and affixes the honeycomb substrate, in this order.

In this case, the connection part may comprise an opening for bringing into communication a region of an outer circumferential surface of the honeycomb substrate near the substrate contact part with outside air.

In the coating attachment of the present invention, since the substrate contact part for contacting the outer edge of an end of the honeycomb substrate has a tapered surface, adhesion of the coating liquid to a part of the outer surface of the honeycomb substrate is suppressed.

In the prior art, when a coating liquid is applied to the inner walls of the flow paths of a honeycomb substrate by the suction method, there are two main reasons why the coating liquid adheres to a part of the outer surface of the honeycomb substrate.

First, when the coating attachment is placed on the upper end surface of the honeycomb substrate, contact between the substrate contact part and the honeycomb substrate may be insufficient, potentially causing the coating liquid to leak from the contact part during suction.

Second, when applying a coating liquid to a plurality of honeycomb substrates consecutively using a single coating attachment, the coating liquid remaining on the substrate contact part may adhere to a part of the outer surface of the next honeycomb substrate.

In connection thereto, in the coating attachment of the present invention, since the substrate contact part has a tapered surface, when placed on the upper end surface of the honeycomb substrate, it is thought that the substrate contact part and the honeycomb substrate adhere sufficiently, whereby leakage of coating liquid from the contact part is suppressed. In the coating attachment of the present invention, since the substrate contact part has a tapered surface and a small contact area with the honeycomb substrate, even when coating liquid adheres to and remains on the substrate contact part, it is unlikely to adhere to a part of the outer surface of the honeycomb substrate.

When the coating attachment of the present invention comprises a connection part and a substrate affixation part located on the second open end side (lower side) of the substrate contact part, and the connection part has an opening for communicating the region of the outer circumferential surface of the honeycomb substrate near the substrate contact part with outside air, even when there is a small gap at the contact part between the substrate contact part and the honeycomb substrate during suction, airflow is generated in the direction of the coating liquid storage part, and this is thought to highly suppress leakage of coating liquid from the contact part.

In the coating attachment of the present invention, due to the features described above, it is believed that adhesion of the coating liquid to a part of the outer surface of the honeycomb substrate during coating is highly suppressed. However, the present invention is not bound by any particular theory.

The constituent elements of the coating attachment of the present invention will be described in order below.

### <Shape>

The coating attachment of the present invention has a substantially cylindrical shape with a first open end open at one end and a second open end open at the other end.

The coating attachment of the present invention is used for coating the inner walls of the flow paths of a honeycomb substrate with a coating liquid by the suction method. During coating, the honeycomb substrate is placed or affixed such that axial direction thereof is substantially parallel to the vertical direction. The coating attachment of the present invention is used placed on the upper end surface of the honeycomb substrate in this state, with the first open end facing upwards and the second open end facing downwards. More specifically, it is assumed that the coating attachment of the present invention is used by placing it such that the tapered surface of the substrate contact part contacts the outer edge of the upper end surface of the honeycomb substrate.

Thus, the coating attachment of the present invention has a substantially cylindrical shape, which is advantageous for use placed on the end surface of a honeycomb substrate.

Hereinafter, in the present description, the direction toward the first open end of the coating attachment may be referred to as "upward" or the "upper side," and the direction toward the second open end may be referred to as "downward" or the "lower side."

### <Coating Liquid Storage Part>

The coating liquid storage part of the coating attachment of the present invention is a part for storing the coating liquid prior to suction when coating the inner walls of the flow paths of a honeycomb substrate with a coating liquid by the suction method.

When the coating attachment of the present invention is placed on the end surface of a honeycomb substrate, it becomes possible to store the coating liquid in the space defined by the end surface of the honeycomb substrate, the inner wall from the substrate contact part to the first open end, and the surface to which the first open end belongs. Therefore, the coating liquid storage part may have any shape.

The coating liquid storage part may have a shape in which the inner diameter increases towards the first open end (upper side). Such a shape has the advantage of allowing for a larger storage capacity of coating liquid and facilitating cleaning after use.

The capacity of the coating liquid storage part may be appropriately set in accordance with the planned amount of coating.

The coating liquid storage part may be composed of a material determined appropriately by a person skilled in the art. For example, the coating liquid storage part may be composed of a synthetic resin, metal, or ceramic. The entire coating liquid storage part may be composed of the same material, or may be composed of a plurality of parts of different materials joined together.

### <Substrate Contact Part>

The coating attachment of the present invention comprises a substrate contact part that is closer to the second open end than the coating liquid storage part and is for contacting the outer edge of the end of the honeycomb substrate.

The inside of this substrate contact part is a tapered surface where the inner diameter increases towards the second open end (lower side). Thus, the uppermost part of the substrate contact part (the part of the substrate contact part closest to the first open end) is the part of the substrate contact part with the smallest inner diameter.

The substrate contact part may be formed continuously with the lowest part (the part of the coating liquid storage part closest to the second open end) of the coating liquid storage part. In this case, the uppermost part of the substrate contact part is aligned with the lowest part of the coating liquid storage part, and may be the part of the coating liquid attachment of the present invention with the smallest inner diameter.

The angle between the tapered surface of the substrate contact part and the axis of the coating attachment may be, for example, 30° or greater and 75° or smaller. From the viewpoint of securing affixation of the honeycomb substrate during coating, this angle may be, for example, 35° or greater, 40° or greater, 45° or greater, or 50° or greater, and from the viewpoint of suppressing uncoated areas in the flow path near the outer circumferential end of the honeycomb substrate, may be, for example, 70° or smaller, 65° or smaller, 60° or smaller, or 55° or smaller.

In the coating attachment of the present invention, the substrate contact part has a tapered surface in which the inner diameter increases towards the second open end (lower side). Thus, when the coating attachment is placed on a honeycomb substrate, the diameter of the tapered surface at the first open end side (uppermost part) is configured so as to be smaller than the outer diameter of the honeycomb substrate.

In this case, the "overhang width," which is defined as the difference between the radius of the honeycomb substrate and the radius of the uppermost part of the tapered surface, may be set in consideration of the balance between coating efficiency and the effects of the present invention. This "overhang width" may be, for example, 0.3 mm or greater, 0.5 mm or greater, or 0.7 mm or greater, and may be, for example, 2.0 mm or smaller, 1.8 mm or smaller, 1.5 mm or smaller, or 1.3 mm or smaller.

The inner surface (tapered surface) of the substrate contact part may be composed of an elastic material. Since the tapered surface of the substrate contact part is composed of an elastic material, adhesion between the tapered surface of the substrate contact part and the honeycomb substrate is improved, suppressing leakage of the coating liquid from that area. As a result, adhesion of the coating liquid to a part of the outer surface of the honeycomb substrate is suppressed.

The elastic material constituting the tapered surface of the substrate contact part may be one or two or greater materials selected from, for example, silicone rubber and fluororubber.

The material constituting the portions of the substrate contact part other than the tapered surface may be a highly rigid material which is capable of maintaining the shape of the substrate contact part. The material constituting the portions of the substrate contact part other than the tapered surface may be, for example, a synthetic resin or a metal.

The substrate contact part of the present invention may be, for example, a cylindrical portion composed of a high-rigidity material, with a tapered inner surface, and a layer of elastic material formed on the inside of this cylindrical portion.

### <Connection Part>

As described above, the coating attachment of the present invention comprises a coating liquid storage part and a substrate contact part.

In addition to the coating liquid storage part and the substrate contact part, the coating attachment of the present invention may further comprise, closer to the second open end than the substrate contact part, a connection part which coaxially surrounds the honeycomb substrate, and
a substrate affixation part which coaxially surrounds the honeycomb substrate and affixes the honeycomb substrate, in this order.

The connection part of the coating attachment of the present invention has a structure which coaxially surrounds the honeycomb substrate. This connection part may have an opening to connect the region of the outer circumferential surface of the honeycomb substrate near the substrate contact part to outside air.

As an example of the case in which the surrounding pressure of the coating attachment is atmospheric pressure, the advantages of providing an opening in the connection part will be explained below. However, the ambient pressure when using the coating attachment of the present invention is not limited to atmospheric pressure, and pressurized or reduced pressure may be used.

In the case in which the coating attachment of the present invention does not comprise a connection part and a substrate affixation part, when the coating attachment is placed on the upper end surface of a honeycomb substrate, the region of the outer circumferential surface of the honeycomb substrate near the substrate contact part is naturally in contact with outside air. Thus, when a coating liquid is stored in the coating liquid storage part of the coating attachment placed on one end surface of the honeycomb substrate and suctioned from the opposite end surface of the honeycomb substrate, the pressure in the region of the outer circumferential surface of the honeycomb substrate near the substrate contact part is atmospheric pressure, and the pressure of the coating liquid stored in the coating liquid storage part becomes lower than atmospheric pressure because it is being suctioned. Thus, in the coating attachment of the present embodiment, leakage of the coating liquid from the substrate contact part is unlikely.

Next, the case in which the coating attachment comprises a connection part and a substrate affixation part will be considered. The honeycomb substrate to which the coating attachment of the present invention is applied may be composed of a ceramic having pores which penetrate the partition wall. In this case, if coating liquid is stored in the coating liquid storage part of the coating attachment and suctioned from the opposite end surface of the honeycomb substrate, it is conceivable that air on the outer circumferential surface side of the honeycomb substrate will be suctioned in through the pores which penetrate the partition wall, causing the pressure on the outer circumferential surface side of the honeycomb substrate to become lower than atmospheric pressure. In such a case, there is a risk that the coating liquid stored in the coating liquid storage part will leak out beyond the substrate contact part into the reduced pressure area and adhere to the outer surface of the honeycomb substrate.

However, when the connection part comprises an opening for connecting the region of the outer circumferential surface of the honeycomb substrate near the substrate contact part to outside air, even if coating liquid is stored in the coating liquid storage part of the coating attachment and suctioned from the opposite end surface of the honeycomb substrate, outside air flows in through the opening, maintaining the air pressure in the region of the honeycomb substrate near the substrate contact part at atmospheric pressure. Thus, during suction, leakage of the coating liquid stored in the coating liquid storage part beyond the substrate contact part to the outer circumferential surface of the honeycomb substrate is suppressed, preventing the coating liquid from adhering to the outer surface of the honeycomb substrate.

The opening of the connection part may extend in the circumferential direction of the connection part. In this case, the opening may extend intermittently around the entire circumference of the connection part, or may extend continuously around the entire circumference of the connection part. It is preferable that the opening of the connection part extend continuously around the entire circumference of the connection part, which allows for smooth pressure adjustment in the region of the honeycomb substrate near the substrate contact part.

The opening width of the connection part (the opening width in the axial direction of the coating attachment) may be appropriately set in consideration of the expected degree of aspiration, the effectiveness of maintaining the air pressure in the region of the honeycomb substrate near the substrate contact part at atmospheric pressure, and the balance with the size of the coating attachment.

Such an opening may be formed by, for example, dividing the connection part into a portion on the first open end side of the opening (upper portion) and a portion on the second open end side of the opening (lower portion), and connecting the two by a columnar part. In this case, a plurality of columnar parts may be provided, and the plurality of columnar parts may be present inside the opening with space between them in the circumferential direction of the connection part. When the entirety of each columnar part is positioned inside the outer circumference of the connection part (closer to the axis of the coating attachment), the opening of the connection part can be configured so as to extend continuously around the entire circumference of the connection part.

The cross-sectional shape obtained by cutting the columnar part in a direction perpendicular to the axial direction of the coating attachment may be, for example, a circular shape, an elliptical shape, a polygonal shape, an arc shape, or a combination thereof.

The material constituting the connection part may be a highly rigid material which is capable of maintaining the shape of the connection part. The material constituting the parts of the substrate contact part other than the tapered surface may be, for example, a synthetic resin or metal. The material constituting the columnar parts may be the same as or different from the material constituting the connection part. The columnar parts may be components separate from the other portions of the connection part, or may be integrally formed with the other portions of the connection part.

### <Substrate Affixation Part>

The substrate affixation part of the coating attachment of the present invention coaxially surrounds the honeycomb substrate, and has the function of affixing the honeycomb substrate. To perform this function, the substrate affixation part may comprise a substrate affixation part body which coaxially surrounds the honeycomb substrate and supports the coating liquid storage part, the substrate contact part, and the connection part, and a balloon-shaped member for pressing and affixing the outer circumferential surface of the honeycomb substrate.

The substrate affixation part body may comprise a flange part at the second open end of the coating attachment for affixing the coating attachment to a coating device or a coating stand in order to effectively perform the support function. The substrate affixation part body, including the flange part when present, may be composed of a highly rigid material.

The balloon-shaped member may be configured such that, for example, the upper end and lower end thereof are affixed between substrate affixation part bodies, and the intermediate part thereof forms a gap between it and the substrate affixation part body. In the present embodiment, by applying air pressure, water pressure, or hydraulic pressure to the gap between the intermediate portion of the balloon-shaped member and the substrate affixation part body, the balloon-shaped member is expanded towards the center, thereby pressing and affixing the outer circumferential surface of the honeycomb substrate.

The material constituting the substrate affixation part body may be a highly rigid material which is capable of maintaining the shape thereof and affixing the honeycomb substrate. The material constituting this part may be, for example, a synthetic resin or metal. The balloon-shaped member may be composed of an elastic material in order to perform the function of pressing and affixing the outer circumferential surface of the honeycomb substrate. The balloon-shaped member may be, for example, neoprene rubber, NBR, or natural rubber.

### <<Coating Method>>

According to another aspect of the present invention, there is provided a coating method for a honeycomb substrate which is performed using the coating attachment of the present invention.

The coating method for a honeycomb substrate of the present invention is a method comprising the steps of:
mounting the coating attachment of the present invention to one end surface of a honeycomb substrate (coating attachment mounting step),
arranging and storing a coating liquid in a coating liquid storage part of the coating attachment (coating liquid storage step), and
suctioning the coating liquid from an opposite end surface of the honeycomb substrate (suction step).

In the coating attachment mounting step, the coating attachment is attached to one end surface of the honeycomb substrate such that the tapered surface of the substrate contact part contacts the outer edge of one end surface of the honeycomb substrate. It is preferable that the "overhang width," which is defined as half the difference between the diameter of the honeycomb substrate and the inner diameter of the uppermost part of the tapered surface of the substrate contact part (the part of the substrate contact part with the smallest inner diameter), be greater from the viewpoint of preventing leakage of coating liquid from the contact part, and it is preferable that the "overhang width" be smaller from the viewpoint of improving the efficiency of supplying the coating liquid to the flow paths near the outer circumference of the honeycomb substrate. The "overhang width" may be appropriately set by a person skilled in the art in consideration of the foregoing.

In the coating liquid storage step, the coating liquid is arranged and stored in the coating liquid storage part of the coating attachment. The viscosity and amount of the coating liquid may be appropriately set by a person skilled in the art in accordance with the size of the honeycomb substrate and the desired coating length (the percentage of the substrate length to be coated).

In the suction step, the coating liquid is suctioned from the opposite end surface of the honeycomb substrate. The degree and duration of this suction may be appropriately set by a person skilled in the art in accordance with the viscosity and amount of the coating liquid.

By drying and firing by known methods, the coated honeycomb substrate can be used as, for example, an exhaust gas purification catalyst.

### <<Specific Embodiments>>

Examples of configurations of the coating attachment of the present invention will be described below with reference to the drawings.

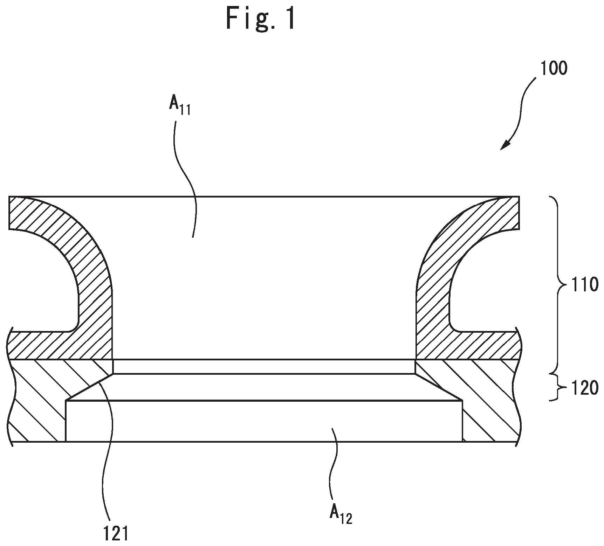

FIG. 1 is a schematic cross-sectional view showing an example of the configuration of the coating attachment of the present invention.

The coating attachment (100) of FIG. 1 has a cylindrical shape overall, with a first opening (A₁₁) open at the upper end and a second opening (A₁₂) at the lower end.

The coating attachment (100) comprises a coating liquid storage part (110) on the first open end (A₁₁) side, and a substrate contact part (120) on the second open end (A₁₂) side of the coating liquid storage part (110).

The coating liquid storage part (110) has a shape in which the same inner diameter is maintained from the boundary with the substrate contact part (120) toward the first open end (A₁₁) side (upper side), but in which the inner diameter expands further toward the first open end (A₁₁).

The substrate contact part (120) is formed continuously with the bottom of the coating liquid storage part (110), and the inner surface is a tapered surface (121) the inner diameter of which increases towards the second open end (A₁₂).

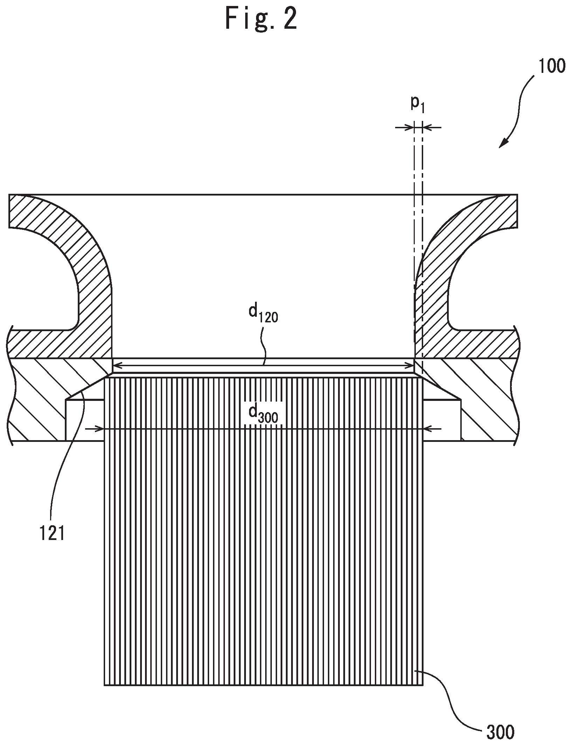

FIG. 2 is a schematic cross-sectional view showing a state in which the coating attachment (100) shown in FIG. 1 is attached to a honeycomb substrate (300).

FIG. 2 shows a state in which the tapered surface (121) of the substrate contact part (120) is in contact with the outer edge of one end surface of the honeycomb substrate (300). The "overhang width (p₁)" is defined as half the difference between the diameter (d₃₀₀) of the honeycomb substrate (300) and the inner diameter (d₁₂₀) of the uppermost part of the tapered surface (121) of the substrate contact part (120).

When the coating attachment (100) shown in FIGS. 1 and 2 is placed on the upper end surface of the honeycomb substrate (300), the region of the outer circumferential surface of the honeycomb substrate (300) near the substrate contact part (120) is always in contact with outside air. Thus, when coating is performed by the suction method using the coating attachment (100), since the pressure in the region of the outer circumferential surface of the honeycomb substrate (300) near the substrate contact part is maintained at atmospheric pressure and does not decrease, leakage of the coating liquid from the substrate contact part (120) is unlikely to occur.

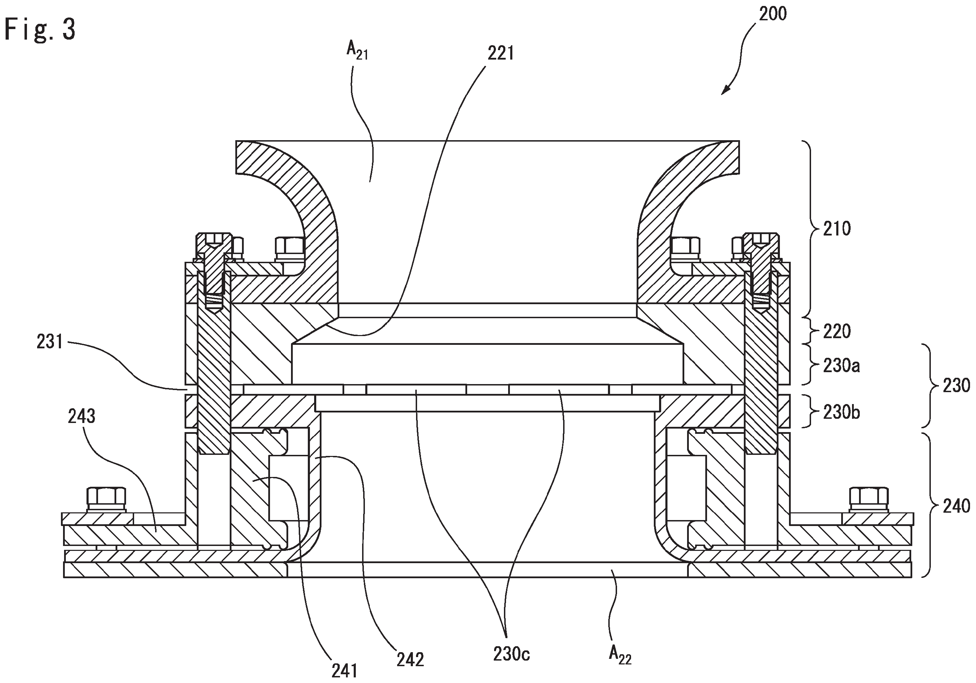

The coating attachment (200) of FIG. 3 has a cylindrical shape overall, with a first opening (A₂₁) at the upper end and a second opening (A₂₂) at the lower end.

The coating attachment (200) comprises a coating liquid storage part (210) on the first open end (A₂₁) side, a substrate contact part (220) located closer to the second open end (A₂₂) than the coating liquid storage part (210), and a connection part (230) and a substrate affixation part (240) located closer to the second open end (A₂₂) than the substrate contact part (220).

The coating liquid storage part (210) and the substrate contact part (220) of the coating attachment (200) are similar in shape to the coating liquid storage part (110) and the substrate contact part (120) of the coating attachment (100) shown in FIGS. 1 and 2, and the substrate contact part (220) has a tapered surface (221).

The connection part (230) coaxially surrounds the honeycomb substrate and has the function of connecting the substrate contact part (220) and the substrate affixation part (240) described later.

The connection part (230) of the coating attachment (200) is divided into a connection part upper portion (230a) on the first open end side (upper side) and a connection part lower portion (230b) on the second open end side (lower side), with the gap between them forming an opening (231). The connection part upper portion (230a) and the connection part lower portion (230b) are connected by a plurality of columnar parts (230c). These columnar parts (230c) are arranged inside the opening (231), spaced apart from each other in the circumferential direction of the connection part (230), and are positioned inward from the outer circumference of the connection part (230) (closer to the axis of the coating attachment (200)). This arrangement of the plurality of columnar parts (230c) allows the opening (231) between the connection part upper portion (230a) and the connection part lower portion (230b) to extend continuously around the entire circumference of the connection part (230).

The substrate affixation part (240) coaxially surrounds the honeycomb substrate, and has the function of affixing the honeycomb substrate.

The substrate affixation part (240) of the coating attachment (200) comprises a substrate affixation part body (241) and a balloon-shaped member (242), and further comprises a flange part (243).

The substrate affixation part body (241) of the substrate affixation part (240) provides strength to the substrate affixation part (240) and the coating attachment (200), and has the function of holding the entirety thereof so that the coating attachment (200) can achieve the intended purpose thereof.

The balloon-shaped member (242) is composed of an elastic material and, by applying air pressure, water pressure, or hydraulic pressure between it and the substrate affixation part body (241), expands toward the center of the coating attachment (200) and has the function of pressing and affixing the outer circumferential surface of the honeycomb substrate.

In the coating attachment (200), the balloon-shaped member (242) is configured such that the upper end thereof is interposed between the connection part upper portion (230a) and the substrate affixation part body (241), and the lower end thereof is interposed between the flange part (243), thereby affixing it, and a gap is formed between the intermediate portion and the substrate affixation part body (241). In the coating attachment (200), the upper end of the balloon-shaped member (242) constitutes a part of the connection part lower portion (230b). Such embodiments are also included in the embodiments of the present invention.

The flange part (243) may be used to affix the coating attachment (200) to a coating device or a coating stand (neither of which are illustrated).

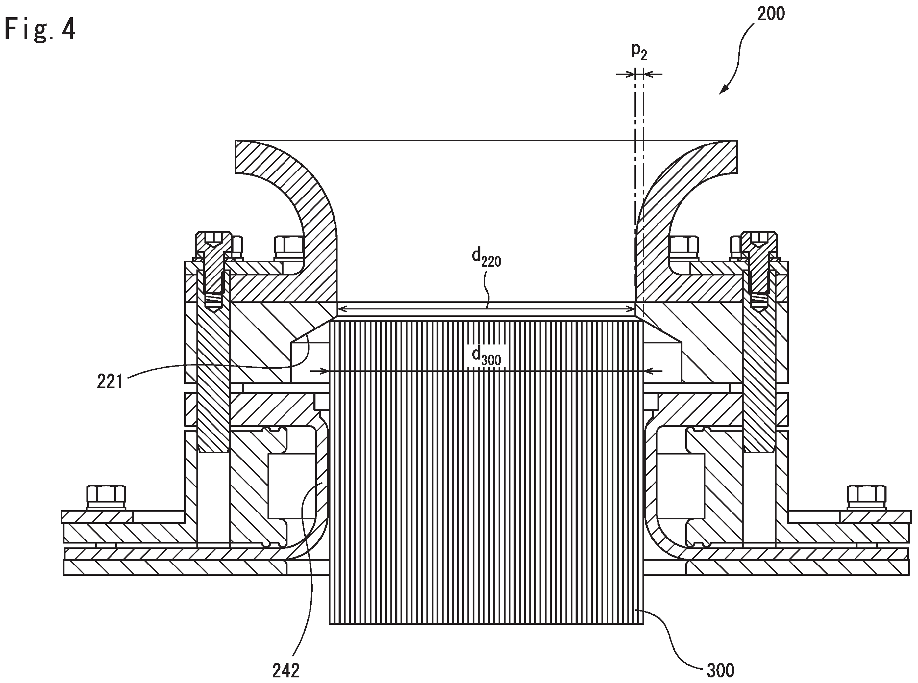

FIG. 4 shows a state in which the tapered surface (221) of the substrate contact part (220) is in contact with the outer peripheral edge of one end surface of the honeycomb substrate (300). The balloon-shaped member (242) of the coating attachment (200) is shown to be expanding towards the center of the coating attachment (200), pressing against and affixing the outer circumferential surface of the honeycomb substrate (300).

The "overhang width (p₂)" is defined as half the difference between the diameter (d₃₀₀) of the honeycomb substrate (300) and the inner diameter (d₂₂₀) of the uppermost part of the tapered surface (221) of the substrate contact part (220).

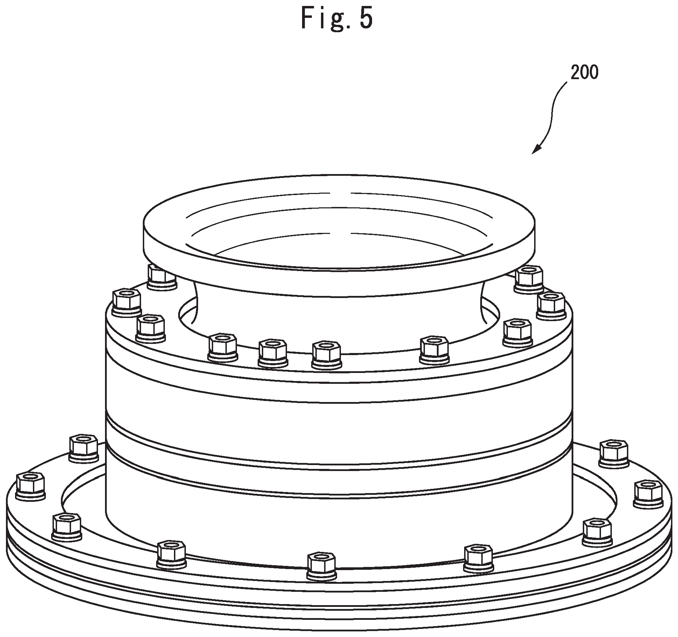

FIG. 5 shows a perspective view of the coating attachment (200).

As shown in FIGS. 3 to 5, when the coating attachment (200) is placed on the upper end surface of the honeycomb substrate (300), the outer circumferential surface of the honeycomb substrate (300) is surrounded by the connection part (230) and the substrate affixation part (240). However, the connection part (230) has an opening (231) which extends continuously around the entire circumference thereof. Thus, when coating is performed by the suction method using the coating attachment (200), outside air flows in from the opening (231), and the pressure in the region of the outer circumferential surface of the honeycomb substrate (300) near the substrate contact part is maintained at atmospheric pressure, making it unlikely that the pressure will decrease, thus suppressing leakage of the coating liquid from the substrate contact part (220).

### EXAMPLES

### <<Examples 1 to 3 and Comparative Examples 1 and 2>>

Coating tests were conducted using coating attachments having the general shape shown in FIG. 2. The coating attachments used in each Example and Comparative Example were attachments in which the angle (taper angle) between the tapered surface of the substrate contact part and the axis of the coating attachment, and the presence or absence of opening in the connection part, were as described in Table 1.

The constituent materials of each part of the coating attachment used in the Examples are as follows:
Coating liquid storage part: polyethylene resin
Substrate Contact Part
   Portions other than the tapered surface: polyethylene resin
   Tapered surface: silicone rubber sheet attached
Substrate Affixation Part
   Portions other than the flange part: polyethylene resin
   Flange part: stainless steel
   Balloon-shaped member: neoprene rubber

In Examples 1 to 3, the opening of the connection part extended continuously around the entire circumference of the connection part, and the width of the opening (the opening width in the axial direction of the coating attachment) was set to 1 mm. The "overhang width," which is defined as half the difference between the diameter of the honeycomb substrate and the inner diameter of the uppermost part of the tapered surface of the substrate contact part, was set to 1.0 mm.

The coating tests were performed by applying 80 g of coating liquid to a cylindrical cordierite honeycomb substrate having a diameter of 80 mm and a length of 65 mm using the suction method. The presence or absence of uncoated flow paths and the amount of coating liquid (dry mass) adhering to the outer surface of the honeycomb substrate were investigated. A plurality of coating tests were performed consecutively, with the substrate being replaced sequentially, and the average value of the coating liquid adhering to the outer surface was used.

The coating liquid used in the coating test was a slurry-type coating liquid for forming the catalyst coating layer of an exhaust gas purification catalyst system, and had the following viscosity at 25°C:
Viscosity at a shear rate of 383 s⁻¹: 180 mPa·s
Viscosity at a shear rate of 3.83 s⁻¹: 5,000 mPa·s

The results are shown in Table 1.

**[Table 1]**

| | Taper angle (°) | Opening | Uncoated flow path | Amount of coating liquid adhering to outer surface (g) |
|---|---|---|---|---|
| Example 1 | 30 | Present | Absent | 0.05 |
| Example 2 | 60 | Present | Absent | 0 |
| Example 3 | 75 | Present | Slightly present | 0 |
| Comparative Example 1 | 0 | Absent | Absent | 0.15 |
| Comparative Example 2 | 60 | Absent | Absent | 1.94 |

Referring to Table 1, the following can be understood:
In the coating tests of Comparative Examples 1 and 2, in which coating attachments without an opening in the connection part were used, there were no uncoated flow paths, but the amount of coating liquid adhering to the outer surface was significant.

In contrast, in the coating tests of Examples 1 to 3, in which a coating attachment in which the substrate contact part had a tapered surface and the connection part had an opening was used, uncoated flow paths were minimal or not present, and the amount of coating liquid adhering to the outer surface was small. In Example 3, some of the flow paths near the outer circumference of the honeycomb substrate were uncoated, but this was not to a degree that posed a practical problem.

These coating tests verified that the coating attachment of the present invention achieves the intended purpose thereof.

### DESCRIPTION OF REFERENCE SIGNS

100, 200 coating attachment
110, 210 coating liquid storage part
120, 220 substrate contact part
121, 221 tapered surface
230 connection part
230a connection part upper portion
230b connection part lower portion
230c columnar part
231 opening
240 substrate affixation part
241 substrate affixation part body
242 balloon-shaped member
243 flange part
300 honeycomb substrate
A₁₁, A₂₁ first opening
A₁₂, A₂₂ second opening
d₁₂₀, d₂₂₀ inner diameter of uppermost part of tapered surface
d₃₀₀ diameter of honeycomb substrate
p1, p2 overhand width

## Claims

1. A coating attachment for coating an inner wall of a flow path of a honeycomb substrate with a coating liquid by a suction method, wherein
the coating attachment has a substantially cylindrical shape with a first open end open at one end and a second open end open at another end,
the coating attachment comprises a coating liquid storage part at the first open end, and a substrate contact part that is closer to the second open end than the coating liquid storage part and is for contacting the outer edge of an end of the honeycomb substrate, and
the substrate contact part has a tapered surface an inner diameter of which increases towards the second open end.

2. The coating attachment according to claim 1, comprising, closer to the second open end than the substrate contact part, a connection part which coaxially surrounds the honeycomb substrate, and
a substrate affixation part which coaxially surrounds the honeycomb substrate and affixes the honeycomb substrate, in this order, wherein
the connection part comprises an opening for bringing into communication a region of an outer circumferential surface of the honeycomb substrate near the substrate contact part with outside air.

3. The coating attachment according to claim 2, wherein the opening of the connection part extends in a circumferential direction of the connection part.

4. The coating attachment according to claim 3, wherein the opening of the connection part extends around an entire circumference of the connection part.

5. The coating attachment according to claim 4, wherein a portion of the connection part closer to the first open end than the opening and a portion of the connection part closer to the second open end than the opening are connected by a plurality of columnar parts that are present in an interior of the opening at a distance from each other in the circumferential direction of the connection part.

6. The coating attachment according to claim 5, wherein a cross-sectional shape obtained by cutting the columnar parts in a direction perpendicular to the axial direction of the coating attachment is circular, elliptical, polygonal, or arcuate.

7. The coating attachment according to any one of claims 2 to 6, wherein the substrate affixation part has a balloon-shaped member for pressing and affixing the outer circumferential surface of the honeycomb substrate.

8. The coating attachment according to any one of claims 1 to 7, wherein the substrate contact part is constituted by an elastic material.

9. The coating attachment according to any one of claims 1 to 8, wherein an angle between the tapered surface of the substrate contact part and an axis of the coating attachment is 35° or greater and 70° or smaller.

10. The coating attachment according to any one of claims 1 to 9, wherein the coating liquid storage part has a shape in which an inner diameter increases towards the first open end.
